Europäisches Patentamt

European Patent Office

Office européen des brevets

(11) Publication number: **0 313 791**
**A1**

## (12) EUROPEAN PATENT APPLICATION

(21) Application number: **88115172.4**

(22) Date of filing: **16.09.88**

(51) Int. Cl.⁴: **A23L 1/221 , A23L 1/16 , A23G 9/02 , A21D 13/08 , A21D 10/02 , B65D 65/46**

(30) Priority: **07.10.87 IT 363387**

(43) Date of publication of application:
**03.05.89 Bulletin 89/18**

(84) Designated Contracting States:
**AT BE CH DE ES FR GB GR LI LU NL SE**

(71) Applicant: **Del Dottore, Catia**
**via Barbieri 17/2**
**Bologna(IT)**

Applicant: **Dondini, Andrea**
**via Estro Menabue 1**
**Bologna(IT)**

(72) Inventor: **Del Dottore, Catia**
**via Barbieri 17/2**
**Bologna(IT)**
Inventor: **Dondini, Andrea**
**via Estro Menabue 1**
**Bologna(IT)**

(74) Representative: **Sassatelli, Franco T., Dr.**
**c/o INIP via Ruggi 5**
**I-40137 Bologna(IT)**

(54) **Eatably assembly consisting of food with spice in container to grip.**

(57) An eatable assembly is foreseen which consists of one or more products either treated and/or spiced in different ways, put in dried paste container (1) to grip with the hand and to eat by means of bites with the container. The contents can be eaten in a different way by bringing it to the mouth by other means. The contents can be particularly carried out in a thin friable layer of paste in kind and relish according to the contents in oder to carry out the gastronomical integration of the eatable whole.

EP 0 313 791 A1

# Eatably assembly consisting of food with spice in container to grip

The invention refers to a new conception system to prepare and consume, with hand support, products treated and spiced in different ways, excluding the use of the container to throw away and any other drawing means. The invention object, which offers a new use canal in public fast food shops, substantially allows a new eatable whole resulting from the integration of the contents with the container. The exigency of rationalizing and granting quickness to the product available on the bench to deliver to the customer, in these shops led to put at his disposal food in containers to waste. In this condition, the product can be eaten by supporting it with the hand palm or by laying the container either on the table or the premises shelves of different kings. This system requires waste containers and causes the inconvenience in the premises due to the necessity of throwing the containers away. Moreover, the uneasy supporting condition of the containers, which is performed on the palm of the hand, induces the customer to avail himself of conventional leaning means in the premises, thus limiting their sheltering possibilities. The invention avoids such inconveniences by adopting a product-container whole which can be integrally eaten and supported on the hand by means of a grip. In this way, the costs of the waste manufactured products are eliminated, the ones for premises serciving and maintenance reduced, since there are no waste parts to eliminate, and the product consumption is allowed even outside the premises, thus avoiding their obstruction.

Substantially, the proceeding foresees to use and eatable whole consisting of one or more products treated and/or flavoured in different ways and fitted in a dry paste container to grip and eat by means of bites. The contents can be eaten otherwise, either by bringing them with the hand or drawing means to the mouth. In particular, the container can be carried out in thin friable paste layer, of kind and relish in accordance with the contents in order to obtain the gastro nomical integration of the eatable components. If a set of containers in different shape and relish is available, by proceeding according to programs established in advance, it is possible to prepare on the bench eatable wholes according to filling sequences with mnemonic check, for prompt use. The proceeding can be better explained by means of an instance which foresees the use of only one product consisting of potato small fried pieces, with above laid sauce, the whole in a cone-shaped container of thin friable paste, of kind and relish according to the said contents.

The version can be noted in a merely indicative way from the drawings of table 1. With reference to this table, fig. 1 is the view of the gripped eatable whole; fig. 2 is the view of the longitudinal section of the same whole and fig. 3 the view from above.

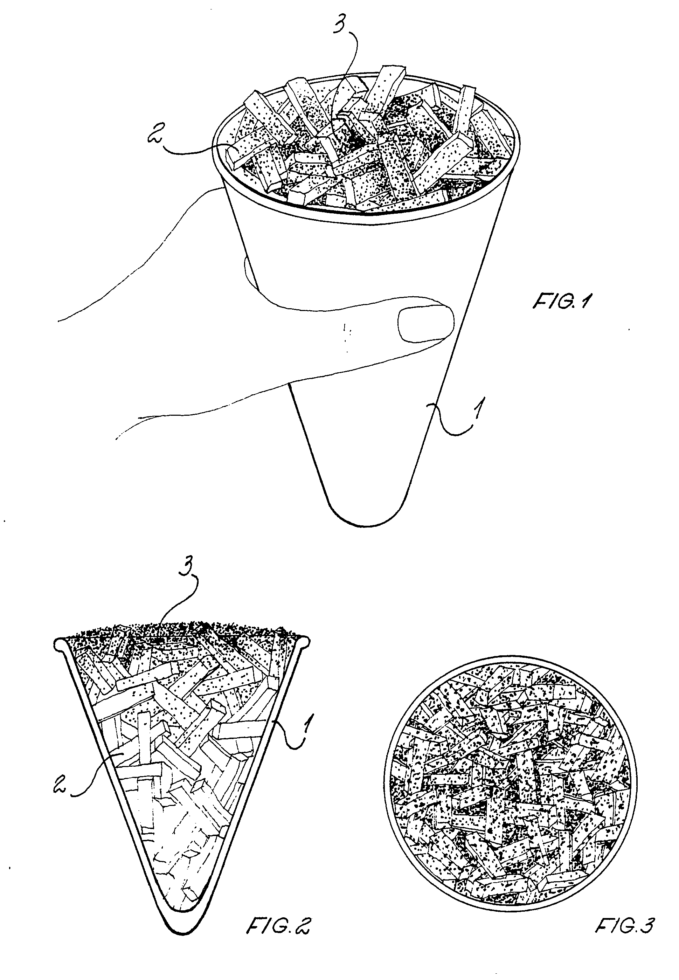

From these drawings, the container can be seen that it acts as a filling calibrator, a condition that enables its filling with mnemonic check. Furthermore, it can be noted that this conical shape assures an ideal condition for hand-gripping the eatable whole.

The integration of the eatable whole components assured by the system, the container 1, the potato small pieces 2 and the relish 3, enable to eat it by means of succeeding bites up to its exhaustion.

In the practical executions, the shapes of the containers can be foreseen in different ways in order to comply with the containment requirements and the products to contain. The proceeding can be universally used and with a view to containing eatable products of different kinds and variously treated and seasoned, either singularly or in connection to each other.

## Claims

1) Eatably assembly consisting of food with spice in container to grip, characterized by the fact that one or more products (2) treated in different ways and spiced (3), are foreseen fitted in a container (1) of dry paste to be gripped and eaten with its contents by means of bites.

2) Eatably assembly consisting of food with spice in container to grip, as per claim 1, characterized by the fact that the contents can be eaten in a different way by bringing it to the mouth with other means, either hand or other drawing tool.

3) Eatably assembly consisting of food with spice in container to grip, as per claim 1, characterized by the fact that the container (1) can be carried out in a thin layer of friable paste of kind and relish according to the contents, in order to obtain the gastronomical integration of the eatable whole components,

4) Eatably assembly consisting of food with spice in container to grip, as per claim 1, characterized by the fact that if a set of containers in different shapes, nature and relish are available, by proceeding according to programmes established in advance and to filling sequences with mnemonic check, it is possible to prepare eatable wholes of different kinds on bench, according to filling sequences, for prompt use.

5) Eatably assembly consisting of food with spice in container to grip, as per claim 1, characterized by the fact that the container (1) acts as a filling calibrator, which condition allows to fill the container with mnemonic check.

6) Eatably assembly consisting of food with spice in container to grip, as per claim 1, characterized by the fact that the container (1) conical shape ensures an ideal condition for the hand gripping of the eatable whole.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN vol. 8, no. 150 (C-233)(1587), 12th July 1984; & JP- A - 59 55171 (SHIGEJI TAGATA) 30-03-84 --- | 1 | A 23 L    1/221<br>A 23 L    1/16<br>A 23 G    9/02<br>A 21 D   13/08<br>A 21 D   10/02<br>B 65 D   65/46 |
| A | US-A-2 890 958  (C.H. BIRNKRANT) * claims 1-6 * --- | 1 | |
| A | GB-A-  941 065  (A. ASKEY) * claims 1-3, figure 1 * --- | 1 | |
| A | US-A-2 925 347  (T.N. CUMMINGS et al.) * claims 1, 2; figure 6 * --- | 1 | |
| A | FR-A-1 210 296  (C. BADINIER) * claims 1-16; figure 1 * --- | 1 | |
| A,P | PATENT ABSTRACTS OF JAPAN vol. 11, no. 365 (C-460)(2812), 27th November 1987; & JP - A - 62138143 (FUJI OIL CO. LTD.) 20-06-1987 (Cat. A) ----- | 1 | |

TECHNICAL FIELDS SEARCHED (Int. Cl.4)

A 23 L    1/00
A 23 G    9/02
A 21 D   13/00
A 21 D   10/00
B 65 D   65/00

The present search report has been drawn up for all claims

| Place of search | Date of completion of the search | Examiner |
|---|---|---|
| BERLIN | 30-12-1988 | SCHULTZE D |

EPO FORM 1503 03.82 (P0401)